# EUROPEAN PATENT APPLICATION

(11) **EP 3 564 894 A1**
(43) Date of publication of application: **06.11.2019**
(21) Application number: 18180788.4
(22) Date of filing: 29.06.2018
(51) Int. Cl.: G06Q 40/02, H04L 12/58, G06F 3/048

(54) **AUXILIARY METHOD, TERMINAL AND MEDIUM BASED ON CHAT SOFTWARE**

(30) Priority: 02.05.2018 CN 201810409370
(71) Applicant: Hunan Byron Network Technology Co., Ltd, 410001 Changsha City, Hunan (CN)
(72) Inventor: ZHANG, Zhaoyuan, Changsha City, Hunan 410001 (CN)
(74) Representative: ZHAOffice SPRL

(57) **Abstract**

The invention provides an auxiliary method, a terminal and a medium based on chat software. The method comprises: providing a financial information button on the chat interface of chat software; when an operation instruction of a user clicking on the financial information button is received, determining the display state of current financial information; if the display state is OFF, configuring the display state to be ON, acquiring the financial information, and displaying the financial information; if the display state is ON, configuring the display state to be OFF and closing the displaying of the financial information. The method adds the function of viewing financial information so that the user can quickly and conveniently view financial information by clicking the financial information button in the chat interface, with no need for frequently switching back and forth between the chat interface and the financial information viewing interface, making the functions of chat software diversified.

## Description

### Technical Field

The present invention relates to the field of Internet technologies, and in particular, to an auxiliary method, a terminal and a medium based on chat software.

### Background

Chat software, also known as IM software or IM tools, refers to tools that provide Internet-based clients with real-time voice and text transmission. Technically, it is mainly divided into server-based IM tool software and P2P technology-based IM tool software.

The biggest difference between real-time messaging and e-mail is that people don't need to wait or press "send and receive" button every two minutes. As long as two people are online at the same time, they can send text, files, sounds, and images to each other, like using a multimedia phone; as long as there is a network, it doesn't matter whether the other party is at the ends of the earth, or how far they are apart.

However, the existing chat software is short in function and basically only has the chat function.

### Summary

In view of the defects in the prior art, the present invention provides an auxiliary method, a terminal and a medium based on chat software, and adds the functions of financial offering, and financial offer and financial information viewing, so that the functions of chat software are diversified.

In the first aspect, there is provided an auxiliary method based on chat software, comprising:
providing a financial information button on the chat interface of chat software;
when an operation instruction of a user clicking on the financial information button is received, determining the display state of current financial information;
if the display state is OFF, configuring the display state to be ON, acquiring the financial information, and displaying the financial information;
if the display state is ON, configuring the display state to be OFF and closing the displaying of the financial information.

Further, the financial information button comprises a financial offer button and/or a financial news button; the financial information comprises financial offer information and/or financial news information.

Further, the chat interface comprises a group-chat chat interface, a private-chat chat interface, an official-chat chat interface, and/or a customer-chat chat interface.

Further, there are multiple pieces of said financial information; said displaying the financial information comprises: displaying the brief descriptive information of each piece of financial information through a display box;
after closing the displaying of the financial information, the method further comprises:
when a click operation of the user clicking on a display box of a piece of financial information is received, entering the display interface of said piece of financial information and displaying all the content of financial information;
receiving the user's forwarding instruction, and forwarding the financial information to a friend.

Further, after closing the displaying of the financial information, the method further comprises:
when the user's creation instruction for creating a chat group is received, configuring a friend adding manner;
if the friend adding manner is to forbid the mutual addition of friends within the group, when a request of mutual addition of friends with a to-be added friend within the group, initiated by a group member, is received, determining the identity of the initiator;
if the identity of the initiator is the group owner or administrator, allowing the initiator and said to-be-added friend within the group to add each other as friends;
if the identity of the initiator is an ordinary group member, determining the identity of said to-be-added friend: if the identity of said to-be-added friend is the group owner or administrator, allowing the initiator and said to-be-added friend to add each other as friends; if the identity of said to-be-added friend is an ordinary group member, forbidding the initiator and said to-be-added friend to add each other as friends;
if the friend adding manner is to allow the mutual addition of friends within the group, when a request of mutual addition of friends with a to-be added friend within the group, initiated by a group member, is received, allowing the initiator and said to-be-added friend within the group to add each other as friends.

Further, after allowing the initiator and said to-be-added friend within the group to add each other as friends, the method further comprises:
when a modification request for modifying the friend adding manner, initiated by a group member, is received, determining whether the initiator is a group owner or administrator: if so, modifying the friend adding manner of the chat group according to the modification request.

Further, after modifying the friend adding manner of the chat group according to the modification request, the method further comprises:
when the friend adding manner of the chat group is successfully modified, notifying all group members within the chat group to perform group update.

In the second aspect, there is provided a terminal, comprising: a processor, an input device, an output device and a memory, wherein the processor, the input device, the output device and the memory are connected to each other, wherein the memory is used for storing a computer program, the computer program comprises program instructions, and the processor is configured to call the program instructions to perform the method of the first aspect.

In the third aspect, there is provided a computer-readable storage medium, wherein the computer storage medium stores a computer program, the computer program comprises program instructions that, when executed by a processor, cause the processor to perform the method of the first aspect.

As can be known from the above technical solution, the auxiliary method, terminal and medium based on chat software provided by the present invention add the function of viewing financial information so that the user can quickly and conveniently view financial information by clicking the financial information button in the chat interface, with no need for frequently switching back and forth between the chat interface and the financial information viewing interface, making the functions of chat software diversified.

### Brief Description of the Drawings

In order to more clearly describe the specific embodiments of the present invention or the technical solutions in the prior art, the drawings used in the description of the specific embodiments or of the prior art will be briefly described below. In all the figures, similar elements or parts are generally identified by similar reference numerals. In the figures, elements or parts are not necessarily drawn to actual scale.
FIG. 1 is a flow chart of a method provided in Embodiment 1.
FIG. 2 is a flow chart of a method provided in Embodiment 2.
FIG. 3 is a block diagram of modules of a terminal provided in Embodiment 3.

### Detailed Description of the Embodiments

The embodiments of the technical solution of the present invention will be described in detail below with reference to the accompanying drawings. The following embodiments are merely used for more clearly illustrating the technical solution of the present invention, and therefore, they are only examples and cannot be used to limit the scope of protection of the present invention. It should be noted that the technical terms or scientific terms used in this application shall be understood in the ordinary sense as understood by a person skilled in the art to which the present invention belongs, unless otherwise specified.

It shall be appreciated that when used in this description and the appended claims, the terms "including" and "comprising" indicate the presence of stated features, integers, steps, operations, elements and/or components, but do not preclude the presence or addition of one or more other features, integers, steps, operations, elements, components and/or combinations thereof.

It shall also be appreciated that the terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise.

It should also be further understood that the term "and/or" used in the description of the invention and the appended claims refers to any combination of one or more of the associated listed items and all possible combinations and comprises such combinations.

As used in this description and the appended claims, the term "if' may be interpreted depending on the context as "when" or "once" or "in response to the determination of" or "in response to the detection of" Similarly, the phrase "if it is determined that" or "upon the detection of (the condition or event described)" may be interpreted according to the context to mean "once determined" or "in response to determining" or "upon the detection of (the condition or event described)" or "in response to the detection of [the condition or event described]."

In specific implementations, the terminals described in the embodiments of the present invention include, but are not limited to, other portable devices such as mobile phones, laptop computers, or tablet computers having a touch-sensitive surface (e.g., a touch screen display and/or a touchpad). It should also be understood that in certain embodiments, the device is not a portable communication device but a desktop computer with a touch-sensitive surface (e.g., a touch screen display and/or a touchpad).

In the following discussion, a terminal including a display and a touch-sensitive surface is described. However, it should be understood that the terminal may include one or more other physical user interface devices such as a physical keyboard, a mouse, and/or a joystick.

The terminal supports various applications such as one or more of the following: drawing application, presentation application, word processing application, website creation application, disk burning application, spreadsheet application, game application, telephone application, video conferencing application, email application, instant messaging application, exercise support application, photo management application, digital camera application, digital video camera application, web browsing application, digital music player application and/or digital video player application.

Various applications that can be executed on the terminal can use at least one common physical user interface device such as a touch-sensitive surface. One or more functions of the touch-sensitive surface and corresponding information displayed on the terminal may be adjusted and/or changed between applications and/or within respective applications. In this way, the terminal's common physical architecture (e.g., the touch-sensitive surface) can support various applications with a user interface that is intuitive and transparent to the user.

### Embodiment 1:

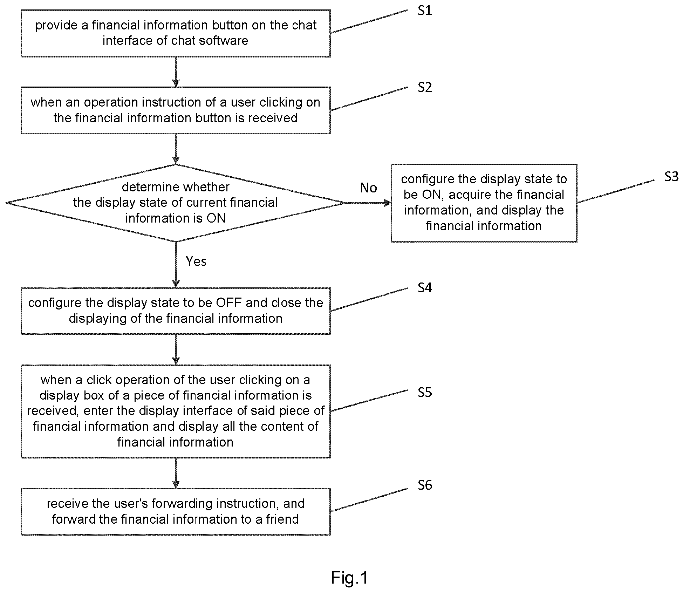

Referring to FIG. 1, in the first aspect, there is provided an auxiliary method based on chat software, comprising:
S1: providing a financial information button on the chat interface of chat software.
   Specifically, the financial information button can be displayed on the chat interface all the time, and when the user wants to view financial information, he or she may click the button to view the corresponding information, that is, the function of viewing financial information at any time during the chat can be realized.
S2: when an operation instruction of a user clicking on the financial information button is received, determining the display state of current financial information;
S3: if the display state is OFF, configuring the display state to be ON, acquiring the financial information, and displaying the financial information;
S4: if the display state is ON, configuring the display state to be OFF and closing the displaying of the financial information.

Specifically, through this method, the user can click the button once to display financial information, and click the button once again to close the displaying of the financial information, and click again to display the financial information, and so on.

This method adds the function of viewing financial information so that the user can quickly and conveniently view financial information by clicking the financial information button in the chat interface, with no need for frequently switching back and forth between the chat interface and the financial information viewing interface, making the functions of chat software diversified.

As further optimization of the present embodiment, the financial information button comprises a financial offer button and/or a financial news button; the financial information comprises financial offer information and/or financial news information.

In the first case, when the financial information button is a financial offer button and the financial information is financial offer information, when an operation instruction of the user clicking on the financial information button is received, the terminal having chat software installed requests to the server through the API and the server acquires, after receiving the client request, the varieties of the offers for the user's subscribed products, such as euro, pound, dollar, RMB, etc. Among them, the user can subscribe to multiple varieties of products, for example, three kinds of them. If the user has not subscribed to the varieties of offers, the server can directly return the financial information of the preset three varieties of offers to the terminal. If the user has subscribed to the varieties, the server returns the financial information to the terminal according to the user's subscribed varieties. If less than three money types have been subscribed, offers of the subscribed varieties are preferentially returned to the terminal, and then offers of the user's most recently viewed varieties are returned to the terminal.

In the second case, when the financial information button is the financial news button and the financial information is the financial news information, and when an operation instruction of the user clicking on the financial information button is received, the terminal having chat software installed requests to the server through the API, and the server acquires, after receiving the client request, the latest news information and returns same to the terminal. Specifically, the server may introduce multiple news sources, each news source corresponds to a news database, each news source corresponds to a news source ID, and the server may configure a default news source ID, so that when returning the financial information, the server acquires the latest news information from the news database corresponding to the news source ID.

As a further optimization of this embodiment, the chat interface comprises a group-chat chat interface, a private-chat chat interface, an official-chat chat interface, and/or a customer-chat chat interface.

Specifically, the financial information button may be provided on the group-chat chat interface, the private-chat chat interface, the official-chat chat interface, and/or the customer-chat chat interface, so that the user can directly, conveniently and quickly view the financial information on each chat interface.

As a further optimization of this embodiment, there are multiple pieces of said financial information; said displaying the financial information comprises: displaying the brief descriptive information of each piece of financial information through a display box; specifically, the financial information can be displayed through a display box. When financial information is required to be displayed, a display box pops up to display the financial information. When the displaying of the financial information is required to be closed, close the display box.

After the step S4, the method further comprises:
S5: when a click operation of the user clicking on a display box of a piece of financial information is received, entering the display interface of said piece of financial information and displaying all thecontent of financial information;

In the first case, when the financial information button is a financial offer button and the financial information is financial offer information, the user can know general offer information content through a display box, and when the user is interested in a piece of offer information, he or she clicks the display box of the offer information, and enters the display interface of the financial information which displays the detailed content. The user may also click on the display box of the offer information to enter a list interface, and the list interface displays the detailed contents of all the financial information that the user has subscribed to. If the user has not subscribed to the offers of varieties, an empty set is returned. When the user is registering, the server pushes the offers of varieties to the terminal.

In the second case, when the financial information button is a financial news button and the financial information is financial news information, when the user is interested in financial news information, he or she clicks on the display box to enter a financial news list which shows the detailed content of news information. The user can configure the order of sorting the subscribed financial information by self, and the financial news list sorts financial news according to the sorting order and shows sorted financial news.

S6: receiving the user's forwarding instruction and forward the financial information to a friend.

Specifically, the user can forward financial information to a friend, a chat group, circle of friends, and the like.

### Embodiment 2:

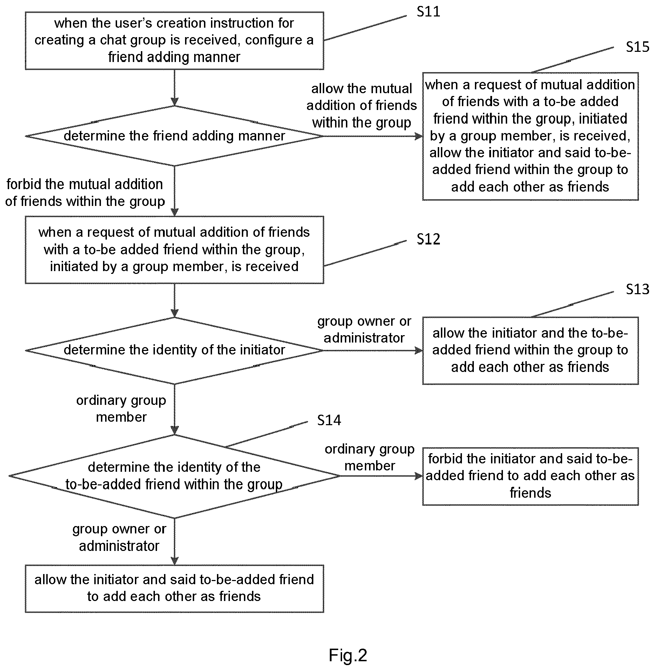

Referring to FIG. 2, the method provided by the second embodiment adds the function of forbidding the mutual addition of friends within a group on the basis of the first embodiment, and after closing the displaying of the financial information, the method further comprises:
S11: when the user's creation instruction for creating a chat group is received, configuring a friend adding manner.
   Specifically, when a chat group is being created, a friend adding manner may be configured or a default friend adding manner may be configured. The group owner or administrator can also modify the friend adding manner during the use of the chat group.
S12: if the friend adding manner is to forbid the mutual addition of friends within the group, when a request for adding a to-be added friend within the group, initiated by a group member, is received, determining the identity of the initiator;
S13: if the identity of the initiator is the group owner or administrator, allowing the initiator and said to-be-added friend to add each other as friends;
S14: if the identity of the initiator is an ordinary group member, determining the identity of said to-be-added friend: if the identity of said to-be-added friend is the group owner or administrator, allowing the initiator and said to-be-added friend to add each other as friends; if the identity of said to-be-added friend is an ordinary group member, forbidding the initiator and said to-be-added friend to add each other as friends.

Specifically, regardless of whether the friend adding manner is to forbid or allow the mutual addition of friends within the group, the group owner and the administrator can add all the members within the group with each other as friends. The group owner or administrator can initiate a request of mutual addition of friends with other administrators, group owners, or general group members. However, if the friend adding manner is to forbid the mutual addition of friends within the group, ordinary group members are only allowed to add the administrator or group owner as friend, and two ordinary group members are not allowed to add each other as friends. In this way, it is convenient for the group owner and administrator to manage the chat group, ordinary group members can also add the administrator or group owner as friend and chat privately.

S15: if the friend adding manner is to allow the mutual addition of friends within the group, when a request for adding a to-be added friend, initiated by a group member, is received, allowing the initiator and said to-be-added friend to add each other as friends.

Specifically, if the friend adding manner is to allow the mutual addition of friends within the group, any two group members in the chat group are allowed to add each other as friends.

In this way, it is possible for an individual member within the group to avoid advertising harassment or sales harassment from members of other groups. When a friend adding manner is to forbid the mutual addition of friends within the group, the harassment member cannot add other members within the group as friends, this avoids the harassment to other members within the group.

As a further optimization of this embodiment, after step S15, the method further comprises:
S16: when a modification request for modifying the friend adding manner, initiated by a group member, is received, determining whether the initiator is a group owner or administrator: if so, modifying the friend adding manner of the chat group according to the modification request.

Specifically, in the process of using the chat group, the group owner or the administrator may modify the friend adding manner at any time according to specific conditions.

As a further optimization of this embodiment, after step S15, the method further comprises:
S17: when the friend adding manner of the chat group is successfully modified, notifying all group members within the chat group to perform group update.

In this way, the notification that the friend adding manner is successfully modified will be told to all the members within the group so that the terminals will perform the local update to the friend adding manner. When a user clicks on a group member's avatar, the newly informed friend adding manner can be displayed, so that the members within the group can instantly know the chat group's friend adding manner and know whether they can add a group member as a friend.

### Embodiment 3:

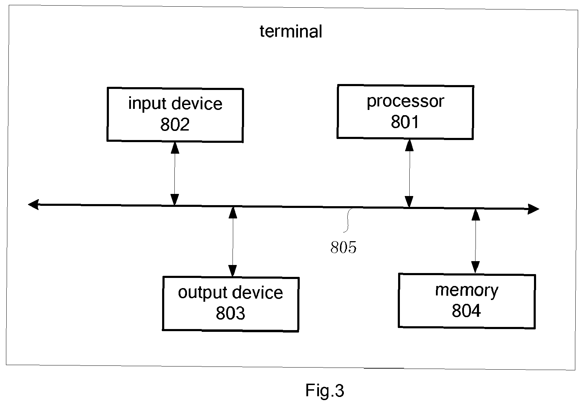

Referring to FIG. 3, there is provided a terminal, comprising a processor 801, an input device 802, an output device 803, and a memory 804, wherein the processor, the input device, the output device and the memory are connected to each other through a bus 805, wherein the memory is used for storing a computer program, the computer program comprising program instructions, the processor being configured to call the program instructions and execute the methods of the first and second embodiments.

It should be understood that in the embodiments of the present invention, the processor 801 referred to may be a central processing unit (CPU), and the processor may also be other general-purpose processor, digital signal processors (DSP), application specific integrated circuit (ASIC), field-programmable gate array (FPGA) or other programmable logic device, discrete gate or transistor logic device, discrete hardware component, and the like. A general purpose processor may be a microprocessor or the processor may be any conventional processor or the like.

The input device 802 may include a touchpad, a fingerprint acquisition sensor (for acquiring fingerprint information of the user and direction information of a fingerprint), a microphone, etc. The output device 803 may include a display (LCD, etc.), a speaker, and the like.

The memory 804 may include a read-only memory and a random access memory, and provide the processor 801 with instructions and data. A portion of the memory 804 may also include a non-volatile random access memory. For example, the memory 804 may also store information such as device type.

In a specific implementation, the processor 801, the input device 802, and the output device 803 described in the embodiments of the present invention may perform the implementations described in the first embodiment and the second embodiment of the method provided by the embodiments of the present invention, and may also perform the implementation of the terminal described in the embodiment of the present invention, and details are not described herein again.

### Embodiment 4:

There is provided a computer-readable storage medium storing a computer program, the computer program including program instructions that, when executed by a processor, cause the processor to perform a method as in the first and second embodiments.

The computer-readable storage medium may be the internal storage unit of the terminal described in any one of the preceding embodiments, such as the hard disk or memory of the terminal. The computer-readable storage medium may also be an external storage device of the terminal, such as a plug-in hard disk, a smart media card (SMC), a secure digital (SD) card, a flash card, etc., equipped on the terminal. Further, the computer-readable storage medium may also include both an internal storage unit and an external storage device of the terminal. The computer-readable storage medium is used for storing the computer program and other programs and data required by the terminal. The computer-readable storage medium may also be used to temporarily store data that has been outputted or will be outputted.

Those of ordinary skill in the art may be aware that the exemplary units and algorithm steps described in conjunction with the embodiments disclosed herein can be implemented by electronic hardware, computer software, or a combination of both, and in order to clearly illustrate the interchangeability of hardware and software, the composition and steps of the various examples have been generally described in terms of functionality in the above description. Whether these functions are executed in hardware or software depends on the specific application of the technical solution and design constraint conditions. A person skilled in the art may use different methods to implement the described functions for each specific application, but such implementation should not be considered to go beyond the scope of the present invention.

In the several embodiments provided in the present application, it should be understood that the disclosed medium, terminal, and method may be implemented in other ways. For example, the device embodiments described above are merely illustrative. For example, the division of the units is only a division based on logical function. In practice, there may be other division manners. For example, multiple units or components may be combined or integrated into another system, or some features may be omitted or not performed. In addition, the illustrated or discussed mutual coupling or direct coupling or communication connection may be indirect coupling or communication connection through some interfaces, devices or units, and may also be electrical, mechanical or other forms of connection.

The units described as separate parts may or may not be physically separated, and the parts displayed as units may or may not be physical units, that is, may be located in a single place, or may be distributed on multiple network units. Some or all of the units may be selected according to actual needs to achieve the objectives of the solutions of the embodiments of the present invention.

In addition, functional units in the embodiments of the present invention may be integrated in a single processing unit or exist alone physically, and also two or more above units may be integrated in a single unit. The above integrated unit can be implemented in the form of either hardware or software functional unit.

The integrated unit, if implemented in the form of a software functional unit and sold or used as a stand-alone product, may be stored in a computer-readable storage medium. Based on such understanding, the technical solution of the present invention essentially or a part thereof contributing to the prior art, or all or part of the technical solution may be embodied in the form of a software product, and this computer software product is stored on a storage medium, and comprises several instructions to enable a computer device (which may be a personal computer, a server, or a network device, etc.) to perform all or part of the steps of the methods described in the various embodiments of the present invention. The foregoing storage medium comprises U disk, removable hard disk, read-only memory (ROM), random access memory (RAM), magnetic disk, or optical disk, and various other mediums capable of storing program code.

Finally, it should be noted that the above embodiments are merely used to illustrate the technical solutions of the present invention, rather than limiting the same; although the present invention is described in detail with reference to the foregoing embodiments, those of ordinary skill in the art should understand that: it is still possible to modify the technical solutions described in the foregoing embodiments or equivalently replace some or all of the technical features; and these modifications or replacements do not deviate the essence of the corresponding technical solutions from the scope of the technical solutions of the embodiments of the present invention, and shall be encompassed within the scope of the claims and description of the present invention.

## Claims

1. An auxiliary method based on chat software, **characterized by** comprising:
providing a financial information button on the chat interface of chat software;
when an operation instruction of a user clicking on the financial information button is received, determining the display state of current financial information;
if the display state is OFF, configuring the display state to be ON, acquiring the financial information, and displaying the financial information;
if the display state is ON, configuring the display state to be OFF and closing the displaying of the financial information.

2. The auxiliary method based on chat software according to claim 1, **characterized in that**:
the financial information button comprises a financial offer button and/or a financial news button; the financial information comprises financial offer information and/or financial news information.

3. The auxiliary method based on chat software according to claim 1 or 2, **characterized in that**:
the chat interface comprises a group-chat chat interface, a private-chat chat interface, an official-chat chat interface, and/or a customer-chat chat interface.

4. The auxiliary method based on chat software according to claim 1, 2 or 3, **characterized in that**, there are multiple pieces of said financial information; said displaying the financial information comprises: displaying the brief descriptive information of each piece of financial information through a display box;
after closing the displaying of the financial information, the method further comprises:
when a click operation of the user clicking on a display box of a piece of financial information is received, entering the display interface of said piece of financial information and displaying all the content of financial information;
receiving the user's forwarding instruction, and forwarding the financial information to a friend.

5. The auxiliary method based on chat software according to any of the preceding claims, **characterized in that**, after closing the displaying of the financial information, the method further comprises:
when the user's creation instruction for creating a chat group is received, configuring a friend adding manner;
if the friend adding manner is to forbid the mutual addition of friends within the group, when a request of mutual addition of friends with a to-be added friend within the group, initiated by a group member, is received, determining the identity of the initiator;
if the identity of the initiator is the group owner or administrator, allowing the initiator and said to-be-added friend within the group to add each other as friends;
if the identity of the initiator is an ordinary group member, determining the identity of said to-be-added friend: if the identity of said to-be-added friend is the group owner or administrator, allowing the initiator and said to-be-added friend to add each other as friends; if the identity of said to-be-added friend is an ordinary group member, forbidding the initiator and said to-be-added friend to add each other as friends;
if the friend adding manner is to allow the mutual addition of friends within the group, when a request of mutual addition of friends with a to-be added friend within the group, initiated by a group member, is received, allowing the initiator and said to-be-added friend within the group to add each other as friends.

6. The auxiliary method based on chat software according to claim 5, **characterized in that**, after allowing the initiator and said to-be-added friend within the group to add each other as friends, the method further comprises:
when a modification request for modifying the friend adding manner, initiated by a group member, is received, determining whether the initiator is a group owner or administrator: if so, modifying the friend adding manner of the chat group according to the modification request.

7. The auxiliary method based on chat software according to claim 6, **characterized in that**, after modifying the friend adding manner of the chat group according to the modification request, the method further comprises:
when the friend adding manner of the chat group is successfully modified, notifying all group members within the chat group to perform group update.

8. A terminal, **characterized by** comprising: a processor, an input device, an output device and a memory, wherein the processor, the input device, the output device and the memory are connected to each other, wherein the memory is used for storing a computer program, the computer program comprises program instructions, and the processor is configured to call the program instructions to perform the method of any of claims 1-7.

9. A computer-readable storage medium, **characterized in that** the computer storage medium stores a computer program, the computer program comprises program instructions that, when executed by a processor, cause the processor to perform the method of any of claims 1-7.
